# EUROPEAN PATENT SPECIFICATION

(11) **EP 4 412 837 B1**
(45) Date of publication and mention of the grant of the patent: **29.10.2025**
(21) Application number: 22797568.7
(22) Date of filing: 03.10.2022
(51) Int. Cl.: B60B 1/14, B60B 9/24, B60B 9/28, B60B 23/10

(54) **WHEEL ASSEMBLY INCLUDING ROTATIONALLY OFFSET AXLE ATTACHMENT ASSEMBLIES AND RELATED METHODS**
RADANORDNUNG MIT ROTATIONSVERSETZTEN ACHSBEFESTIGUNGSANORDNUNGEN UND ZUGEHÖRIGE VERFAHREN
ENSEMBLE ROUE COMPRENANT DES ENSEMBLES DE FIXATION D'ESSIEU À DÉCALAGE DE ROTATION ET PROCÉDÉS ASSOCIÉS

(30) Priority: 06.10.2021 US 202163360495 P; 02.06.2022 US 202217831208
(43) Date of publication of application: 14.08.2024
(73) Proprietor: GACW Incorporated, Chandler, AZ 85226 (US)
(72) Inventor: KEMENY, Zoltan, Chandler, Arizona 85226 (US)
(74) Representative: Page White Farrer
(86) International application number: PCT/US2022/045496
(87) International publication number: WO 2023/059535

(56) References cited:
- EP-A1- 1 627 750
- WO-A2-2015/105548
- US-A1- 2020 369 079
- US-B2- 10 173 463

## Description

### Technical Field

The present invention relates to the field of wheels, and more particularly, to wheel assemblies for a vehicle and related methods.

### Background

A typical wheel may include a rim and tire surrounding the rim. The tire transfers a load of a vehicle from the axle through the wheel to the ground. Tires, for example, those found on most vehicles are pneumatic tires. In other words, a typical tire is pneumatically inflated, for example, with air or other gas, such as nitrogen. More particularly, air is injected into the space between the rim and the inside of the tire to inflate it.

During operation, being pneumatically inflated, a tire absorbs the forces as the vehicle travels over the road surface. The tire and associated inflation pressure may be selected to absorb the above-noted forces while reducing any deformation. However, in many instances, excessive forces placed on the tire may cause the tire and/or rim to deform, puncture, or blowout. Typical forces also cause tread wear of the tire, while excessive forces may also cause rapid tread wear that may lead to a shortened lifespan of the tire and decreased structural integrity of the wheel.

To address the shortcomings of pneumatic-based wheels, non-pneumatic wheels have been developed. By non-pneumatic, it is meant that air or other gas is not injected to inflate an interior volume of a tire. One approach to a non-pneumatic wheel uses mechanical springs. For example, U.S. Patent No. 911,975 to Gustafson discloses a spring wheel. Secondary spokes are arranged in pairs between pairs of main spokes and the members of each of the secondary spokes therefore pass upon opposite sides of a corresponding pair of intersecting braces. Each of the secondary spokes includes a pair of telescoping members that are pivotally connected at its outer end to ears formed on the hub and extends at its opposite end into a corresponding member.

U.S. Patent No. 1,601,518 to Weston discloses a resilient wheel that includes radial arms. Connection between a hub and rim members may be provided by pivot pins in outer ends of these arms that have links journaled thereon. The links are pivotally articulated with bent levers, which are in turn pivoted on bracket arms that extend inwardly from the part-circular plates, which are mounted on an inner periphery of a tire holding rim.

Another approach includes a disc between a wheel hub and outer rim. For example, U.S. Patent No. 1,808,886 to Courtney also discloses a disc or sidewall between a wheel hub and a rim. The disc is engaged by studs that project from the wheel hub and extends from an outer flange obliquely to the wheel hub. The disc assists the wheel tire and rim by resisting any tendency to become displayed laterally as a result of stresses occurring while the wheel is turning.

U.S. Patent No. 1,979,935 to Henap discloses a hydraulic spoke wheel. Each of the hydraulic spokes include telescoping sections in the form of an outer section and an inner section. The outer section has the stud projecting from one end. The inner section extends from the outer section and is equipped at its extended end with the stem.

U.S. Patent No. 6,041,838 to Al-Sabah discloses a wheel that includes spokes positioned in a spaced apart relation to each other. Each of the spokes has a first end connected to a rim and a second end connected to a plate member tip of a hub plate member in an offset position from the respective radial axis thereof. The offset position of each of the spokes is further defined by each of the spokes being connected to a respective one of the plate member tips at a predetermined angle (e.g., less than 90-degrees) from the radial axis thereof and defining an operative offset spoke axis, which intersects the radial axis of the plate member tips at the predetermined angle.

U.S. Patent No. 6,698,480 to Cornellier discloses shock absorbing spokes each having a central cylindrical tube. Each tube has an interior cap having an aperture and an exterior cap having an aperture. Each spoke has an interior piston, a rod with an aperture and a pin. The pin pivotably couples one of the spokes to the hub. Each spoke has an exterior piston, a rod with an aperture and a pin. The pin pivotably couples one of the spokes to the rim assembly. The interior pistons and exterior pistons divide the space within each tube into an interior chamber, an exterior chamber, and a central chamber.

European Patent Application No. EP1627750 discloses an eccentric thrust bearing assembly mounted in a wheel with built-in suspension including an outside wheel member including a rim portion to which a tire is mounted; an inside wheel member including a disk portion coupled with an axle; and an elastic member interposed between the outside wheel member and the inside wheel member, the bearing assembly permitting an eccentric relative movement between the wheel members while bearing an axial load applied between the wheel members.

U.S. Patent Application Publication No. 2020/0369079 to Kemeny discloses an off-highway vehicle may include an off-highway vehicle frame and a motor carried by the off-highway vehicle frame. The off-highway vehicle may also include wheel assemblies rotatably coupled to the off-highway vehicle frame without an intervening vehicle suspension and at least some of th wheel assemblies being driven by the motor. Each of the wheel assemblies may include an inner rim coupled to the hub, an outer rim surrounding the inner rim, and gas springs coupled between the inner rim and the outer rim to provide a gas suspension for relative movement between the inner and outer rims.

Despite advances in pneumatic tire wheels, and non-pneumatic tire wheels, there is still a need for improvements in wheel technology, particularly, for large construction vehicles, or mining vehicles, for example. The expense of wheel replacement, and the downtime experienced during wheel replacement may add significant expenses to the construction or mining projects.

### Summary

Some aspects of the present invention can be seen from the appended claims

### Brief Description of the Drawings

FIG. 1 is a schematic perspective view of a wheel assembly according to an embodiment.
FIG. 2 is a schematic side view of the wheel assembly of FIG. 1.
FIG. 3 is a schematic side view of the wheel assembly of FIG. 2 under displacement.
FIG. 4 is a schematic perspective view of the axle assemblies of the wheel assembly of FIG. 1.
FIG. 5 is a partial cut-away view of the gas spring with associated integral hydraulic damper of the wheel assembly of FIG. 1.
FIG. 6 is another partial cut-away view of the gas spring with associated integral hydraulic damper of the wheel assembly of FIG. 1.
FIG. 7 is another partial cut-away view of the gas spring with associated integral hydraulic damper of the wheel assembly of FIG. 1.
FIG. 8 is an enlarged partial cut-away view of a portion of the gas spring with associated integral hydraulic damper of the wheel assembly of FIG. 1.
FIG. 9 is a partial cut-away view of a gas spring with associated integral hydraulic damper in accordance with another embodiment.
FIG. 10 is a schematic perspective view of a wheel assembly according to another embodiment.
FIG. 11 is a schematic side view of the wheel assembly of FIG. 10.
FIG. 12 is a schematic side view of the wheel assembly of FIG. 11 under displacement.
FIG. 13 is a schematic perspective view of the axle assembly of the wheel assembly of FIG. 10.

### Detailed Description

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation and multiple prime notation is used to indicate similar elements in alternative embodiments.

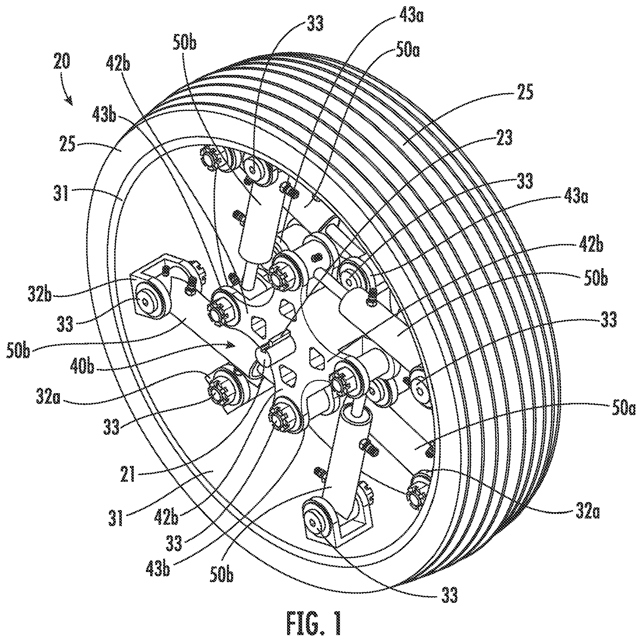

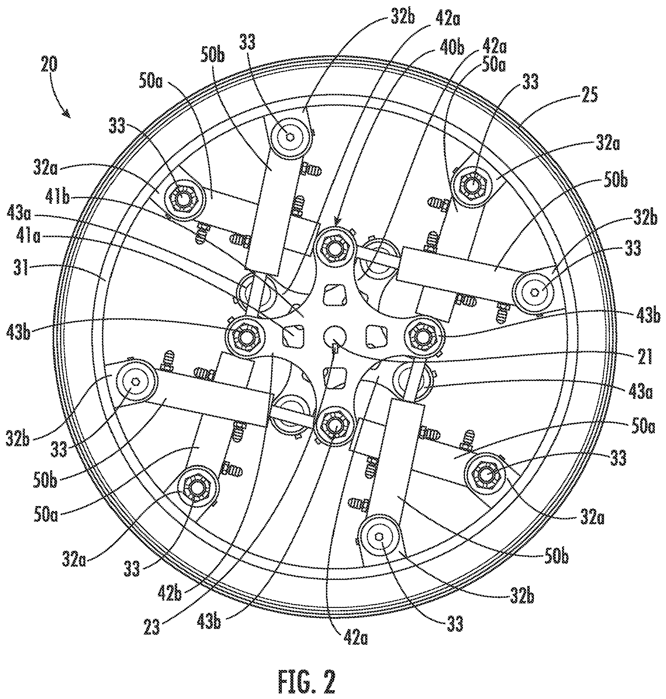

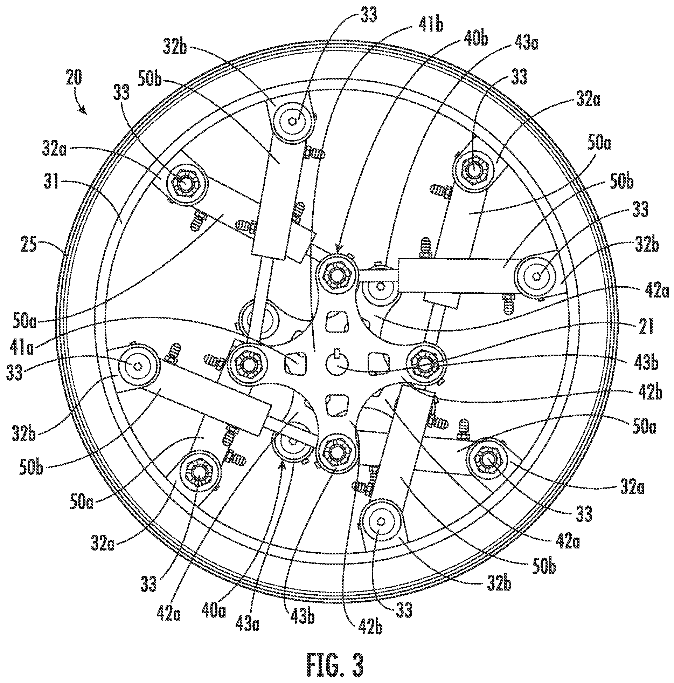

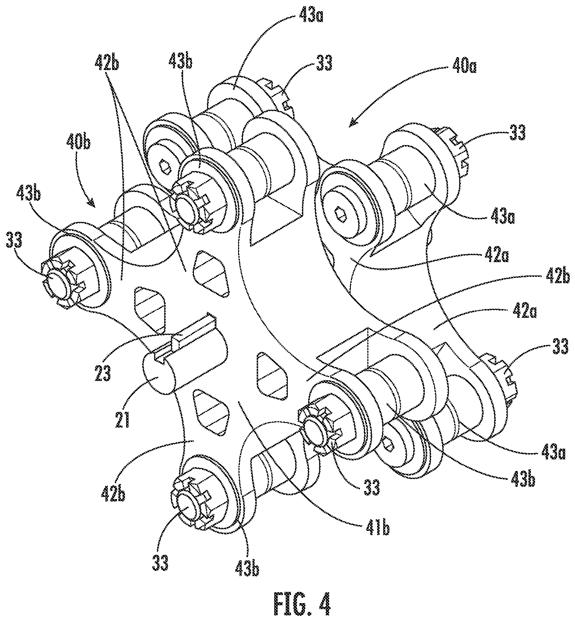

Referring initially to FIG. 1-4, a wheel assembly **20** may be for coupling to an axle **21,** for example, of a bicycle, rickshaw, wheelchair, lawnmower, wagon, or other lightweight vehicle. The wheel assembly **20** includes an outer rim **31,** for example, surrounding the axle **21.** The axle **21** has a keyway therein.

A tread **25** is illustratively carried by an exterior of the outer rim **21.** For example, the tread **25** may include a solid non-pneumatic tread, for example, and include rubber. Of course, the tread **25** may include another material and may have a tread pattern corresponding to a particular usage.

The wheel assembly **20** also illustratively includes distal inboard attachment points **32a** coupled to the outer rim **31** and distal outboard attachment points **32b** coupled to the outer rim. More particularly, the distal inboard attachment points **32a** and the distal outboard attachment points **32b** are carried by the outer rim **31** adjacent the inboard side of the wheel assembly **20** and the outboard side of the wheel assembly, respectively. The distal inboard and distal outboard attachment points **32a, 32b** each have a U-shape to receive a respective inboard or outboard gas spring **50a, 50b.** The respective gas spring **50a, 50b** is secured to the corresponding distal inboard or outboard attachment point **32a, 32b** via a fastener **33** (e.g., screw and nut) so that the respective inboard or outboard gas springs pivot about the fastener.

The wheel assembly **20** also includes an inboard axle attachment assembly **40a.** The inboard axle attachment assembly **40a** has an axle receiving opening therein to receive the axle **21** therethrough. A keyway is coupled to the axle receiving opening.

The inboard axle attachment assembly **40a** illustratively includes an inboard medial portion **41a** to be coupled to the axle **21.** Angularly spaced inboard arms **42a,** for example, equally spaced around the inboard medial portion **41a,** extend outwardly from the inboard medial portion and define proximal inboard attachment points **43a** for coupling to the inboard gas springs **50a.** While there are illustratively four angularly spaced inboard arms **42a,** there may be any number of angularly spaced inboard arms.

The wheel assembly **20** also includes an outboard axle attachment assembly **40b.** The inboard axle attachment assembly **40b** has an axle receiving opening therein to receive the axle **21** therethrough. A keyway is coupled to the axle receiving opening. A locking spline **23** is received within the keyways to lock the inner and outer axle attachment assemblies **40a, 40b** to the axle **21** and to restrict relative rotation among the axle, the inner axle attachment assembly, and the outer axle attachment assembly.

The outboard axle attachment assembly **40b** is rotationally offset from the inboard axle attachment assembly **40a.** While the rotational offset of about 30-degrees is illustrated, those skilled in the art will appreciate the rotational offset may be another angle, for example, 45-degrees. The outboard axle attachment assembly **40b,** similarly to the inboard axle attachment assembly **40a,** includes an outboard medial portion **41b** to be coupled to the axle **21,** and angularly spaced outboard arms **42b,** for example, equally spaced around the outboard medial portion, extending outwardly from the outboard medial portion and defining proximal outboard attachment points **43b** for coupling to the outboard gas springs **50b.** The rotational offset between the inboard and outboard axle attachment assemblies **40a, 40b** permits inboard and outboard access to the inboard and outboard gas springs **50a, 50b** at the distal inboard and distal outboard attachment points **32a, 32b** and at the proximal inboard and outboard attachment points **43a, 43b.**

The inboard gas springs **50a** are each coupled between respective ones of the distal inboard attachment points **32a** and the proximal inboard attachment points **43a.** The outboard gas springs **50b** are each coupled between respective ones of the distal outboard attachment points **32b** and the proximal outboard attachment points **43b.** The inboard and outboard gas springs **50a, 50b** each have an operating stroke that defines a mechanical stop.

Each inboard and outboard gas spring **50a, 50b** are in the form of an inboard and outboard gas springs with associated integral hydraulic dampers. As will be appreciated by those skilled in the art, the gas springs with associated integral hydraulic dampers **50a, 50b** provide the suspension and provide damping.

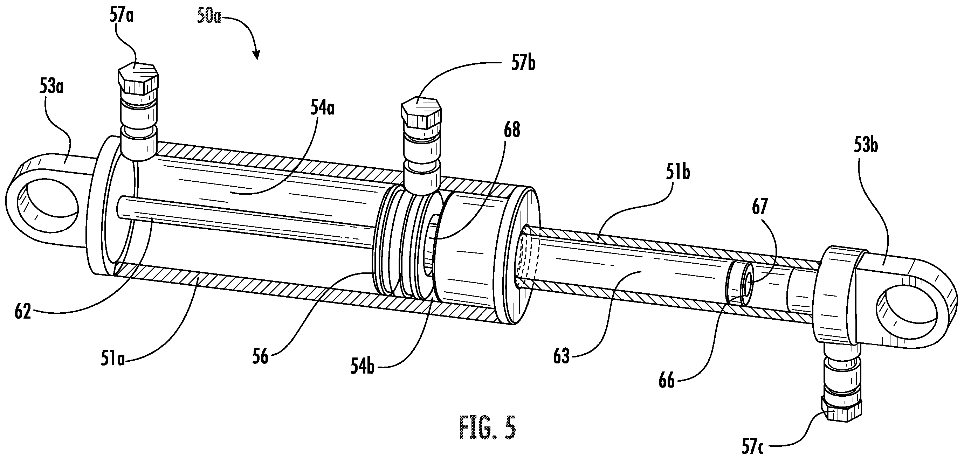

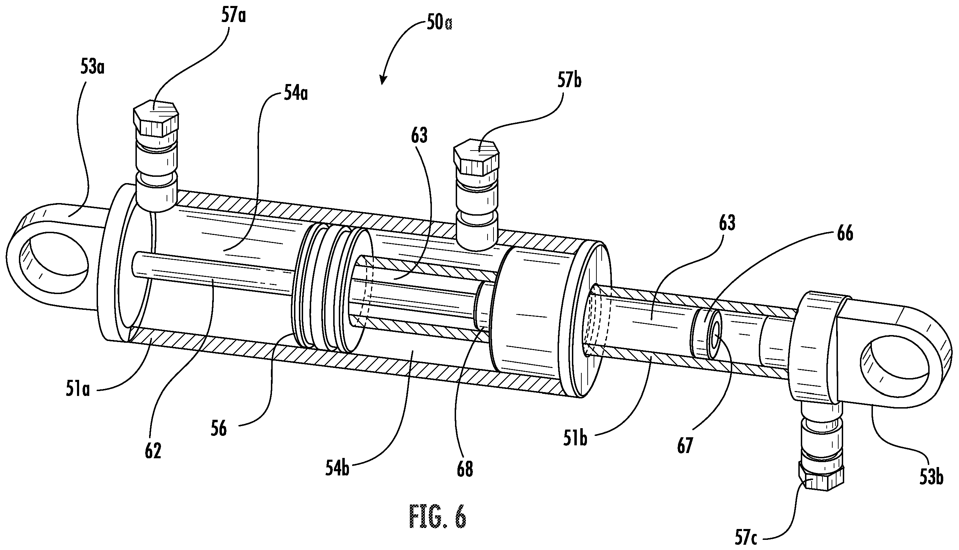

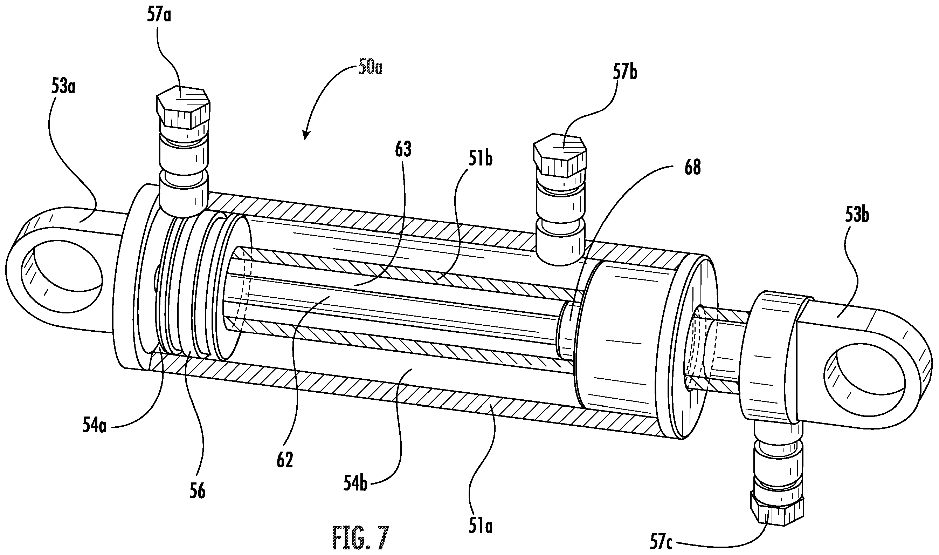

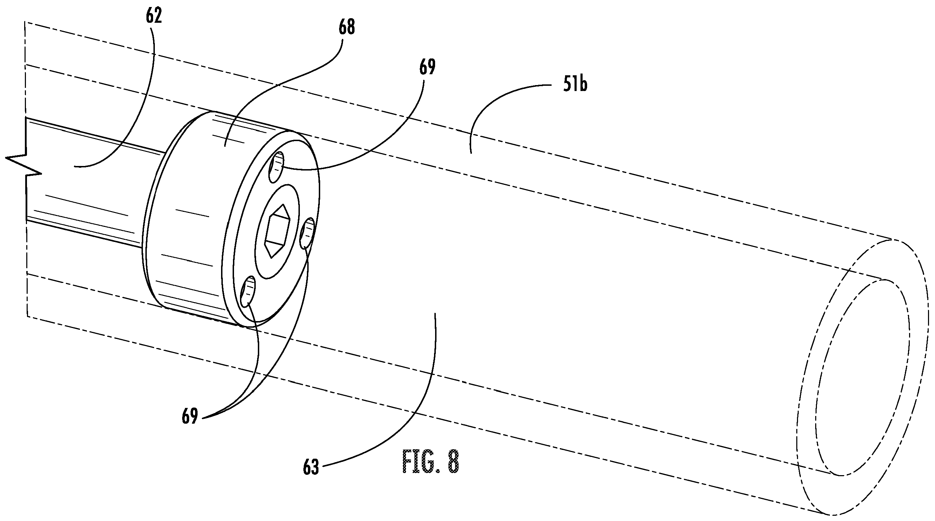

Referring now additionally to FIGS. 5-8, further details of an exemplary gas spring with associated integral hydraulic damper **50a** (inboard or outboard) will now be described. The gas spring with associated integral hydraulic damper **50a** includes a first cylinder body **51a** and a second cylinder body **51b.** The second cylinder body **51b** is slidable within the first cylinder body **51a.** In other words, the second cylinder body **51b** may conceptually be considered a piston movable within with the first cylinder body **51a.**

A first seal **56** is carried by an end of the of second cylinder body **51b.** The first seal **56** defines first and second gas chambers **54a, 54b** within the first cylinder body **51a.** A shaft **62** is coupled to an end of the first cylinder body **51a** and extends within the first cylinder body and into the second cylinder body **51b.** The shaft **62** defines a hydraulic fluid chamber **63** within the second cylinder body **51b.** Each gas spring with associated integral hydraulic damper **50a** also includes an enlarged orifice body **68** coupled to the shaft **62** to define a hydraulic damper with the second cylinder body **51b.** The enlarged orifice body **68** has orifices **69** therein to permit the flow of hydraulic fluid therethrough. While three orifices **69** are illustrated, there may be any number of orifices.

A flow restrictor **66** is carried within the second cylinder body **51b.** The flow restrictor **66** illustratively includes an orifice **67** therein to permit hydraulic fluid to pass therethrough.

Gas ports **57a, 57b** are respectively coupled to the first and second gas chambers **54a, 54b** of each gas spring with associated integral hydraulic damper 50. A hydraulic fluid port **57c** is coupled to the second cylinder body **51b.** While two gas ports and one hydraulic fluid port is illustrated, those skilled in the art will appreciate that there may be more any number of gas and hydraulic fluid ports **57a-57c.**

Each gas spring with associated integral hydraulic damper **50a** also includes first and second mounting brackets **53a, 53b** coupled to the first and second cylinder bodies **51a, 51b,** respectively. The first and second mounting brackets **53a, 53b,** similar to the mounting brackets described above, are for mounting the gas springs with associated integral hydraulic dampers **50a** between the distal and proximal attachment points **32a, 43a.**

Those skilled in the art will appreciate that the gas springs with associated integral hydraulic dampers **50a, 50b** may advantageously provide a gas suspension and a damper function while saving space within the wheel assembly. More particularly, the gas springs with associated integral hydraulic dampers **50a, 50b** provide this functionality by way of a Kelvin coupling mechanism, as will be appreciated by those skilled in the art.

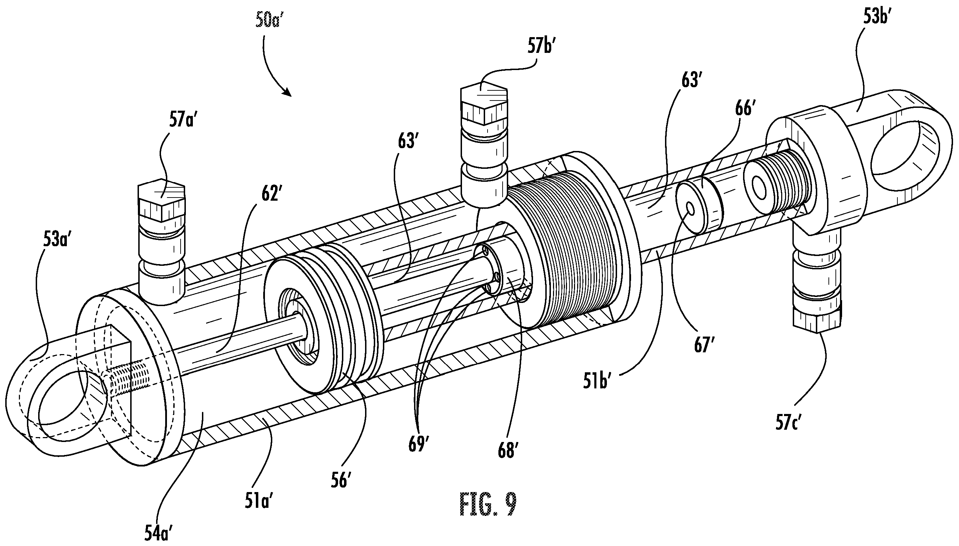

Referring briefly to FIG. 9, in another embodiment, the shaft **62',** the first seal **56',** an end of the first cylinder body **51a',** and the end of the second cylinder body **51b'** opposite the first seal may be threaded. By provided threads on the shaft **62',** the first seal **56',** and the ends of the first and second cylinder bodies **51a', 51b',** the gas springs with associated integral hydraulic dampers **50'** may be adjusted for a desired response with respect to the spring and damper. A volume compensator (e.g., in the form of a reservoir and diaphragm, not illustrated) may be spring loaded, in which case, a charge post may not be desirable. Other elements illustrated but specifically described, for example, the first cylinder body **51a',** the enlarged orifice body **68'** and associated orifices **69',** the first and second gas chambers **54a', 54b',** the second cylinder wall **66'** and associated orifice **67',** the hydraulic fluid chamber **63',** the ports **57a'-57c',** and the first and second mounting brackets **53a', 53b'** are similar to those described above. Further details of wheel assemblies including gas springs with integral dampers are describe in U.S. Patent Application Publication No. US-2020-0369079-A1, the entire contents of which are hereby incorporated by reference.

A method aspect is directed to a method of making wheel assembly **20** for coupling to an axle **21.** The method includes coupling a plurality of distal inboard attachment points **32a** to an outer rim **31** and a plurality of distal outboard attachment points **32b** coupled to the outer rim, and coupling an inboard axle attachment assembly **40a** to the axle, the inboard axle attachment assembly including an inboard medial portion **41a** to be coupled to the axle and a plurality of angularly spaced inboard arms **42a** extending outwardly from the inboard medial portion and defining proximal inboard attachment points **43a.** The method also includes coupling an outboard axle attachment assembly **40b** to the axle **21,** the outboard axle attachment assembly being rotationally offset from the inboard axle attachment assembly **40a** and including an outboard medial portion **41b** to be coupled to the axle and a plurality of angularly spaced outboard arms **42b** extending outwardly from the outboard medial portion and defining proximal outboard attachment points **43b.** The method also includes coupling each of a plurality of inboard gas springs **50a,** between respective ones of the distal inboard attachment points **32a** and the proximal inboard attachment points **43a,** and coupling each of a plurality of outboard gas springs **50b,** between respective ones of the distal outboard attachment points **32b** and the proximal outboard attachment points **43b.**

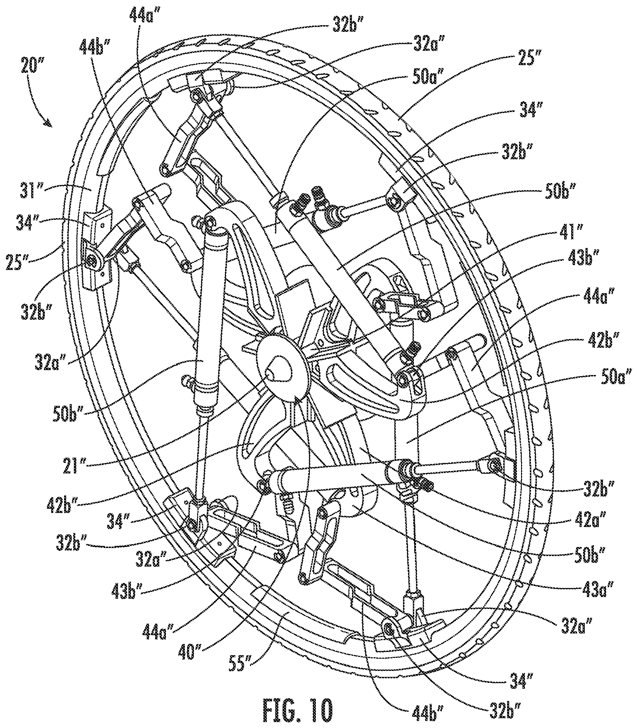

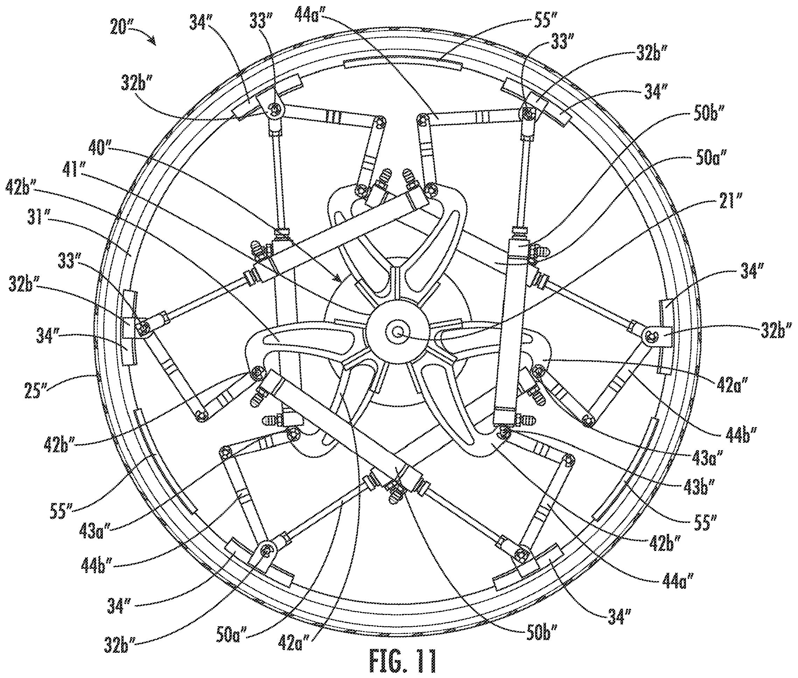

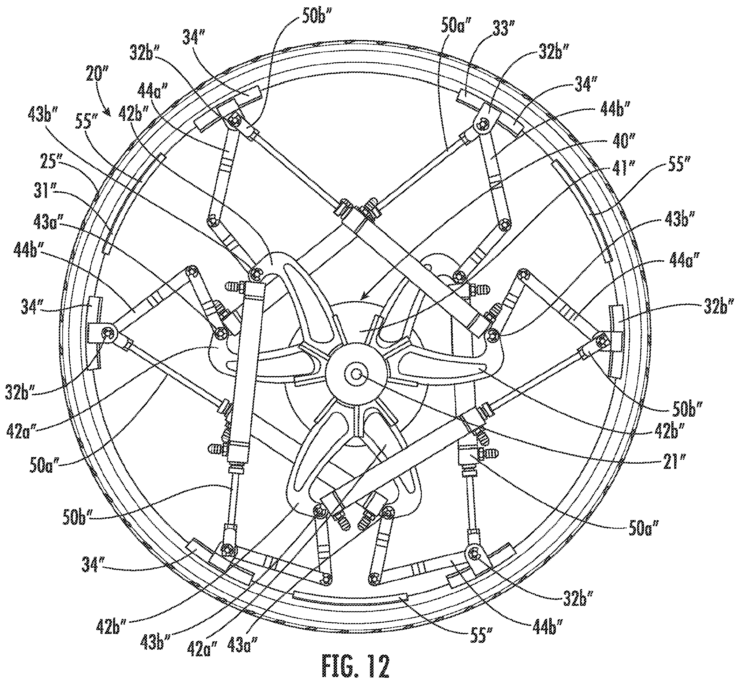

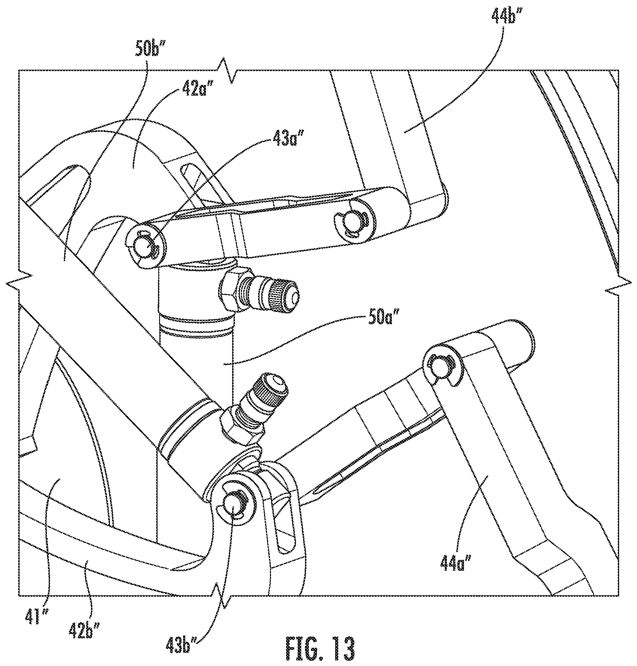

Referring now to FIGS. 10-13, in another embodiment, a wheel assembly **20"** for coupling to an axle **21",** for example, of a bicycle, rickshaw, wheelchair, lawnmower, wagon, or other lightweight vehicle. The wheel assembly **20"** includes an outer rim **31",** for example, surrounding the axle **21".**

A tread **25"** is illustratively carried by an exterior of the outer rim **31**". For example, the tread **25"** may include a solid non-pneumatic tread, for example, and include rubber. Of course, the tread **25"** may include another material and may have a tread pattern corresponding to a particular usage.

The wheel assembly **20"** also illustratively includes distal inboard attachment points **32a"** coupled to the outer rim **31"** and distal outboard attachment points **32b"** coupled to the outer rim. More particularly, the distal inboard attachment points **32a"** and the distal outboard attachment points **32b"** are carried by the outer rim **31".** The distal inboard and distal outboard attachment points **32a", 32b"** each couple to a common attachment bracket **34"** having a shape conforming to the shape of the interior of the outer rim **31"** and couple a respective inboard or outboard spring **50a", 50b"** and respective inboard or outboard lateral stop **44a", 44b"** thereto. The respective gas spring **50a", 50b"** and respective inboard or outboard lateral stop **44a", 44b"** are secured to the corresponding distal inboard or outboard attachment point **32a", 32b"** via a fastener **33"** so that the respective inboard or outboard gas spring **50a", 50b"** and inboard and outboard attachment point pivot about the fastener. In other words, for any given outboard distal attachment point **32b",** whereto a corresponding outboard gas spring **50b"** is coupled, an inboard lateral stop **44a"** is also coupled. A single fastener **33"** secures both an outboard gas spring **50b"** and an inboard lateral stop **44a"** to the outboard attachment point **32b"** at the corresponding attachment bracket **34".**

The wheel assembly **20"** also illustratively includes an axle attachment assembly **40".** The axle attachment assembly **40"** includes a medial portion **41'** to be coupled to the axle **21",** and a rotationally spaced inboard arcuate arms **42a"** extending outwardly from the medial portion and defining a plurality of proximal inboard attachment points **43a".**

The wheel assembly **20"** also illustratively includes a rotationally spaced outboard arcuate arms **42b"** extending outwardly from the medial portion **41"** and defining a plurality of proximal outboard attachment points **43b".** Together with the inboard arcuate arms **42a",** the outboard arcuate arms **42b"** generally have a C-shape. Moreover, while there are illustratively three inboard and three outboard arcuate arms **42a", 42b",** those skilled in the art will appreciate that there may be any number of inboard and outboard arcuate arms.

The inboard gas springs **50a"** are each coupled between respective ones of the distal inboard attachment points **32a"** and the proximal inboard attachment points **43a".** The outboard gas springs **50b"** are each coupled between respective ones of the distal outboard attachment points **32b"** and the proximal outboard attachment points **43b".** The inboard and outboard gas springs **50a", 50b"** each have an operating stroke that defines a mechanical stop.

Each inboard and outboard gas spring **50a", 50b"** may be in the form of inboard and outboard gas springs with associated integral hydraulic dampers, for example, as described above with respect to FIGS. 5-9. As will be appreciated by those skilled in the art, the gas springs with associated integral hydraulic dampers **50a", 50b"** provide the suspension and provide damping. Further details of wheel assemblies including gas springs with integral dampers are describe in U.S. Patent Application Publication No. US-2020-0369079-A1, the entire contents of which are hereby incorporated by reference.

The inboard lateral stops **44a"** are each coupled between a respective distal inboard attachment point **32a"** and a respective proximal inboard attachment point **43a".** Each inboard lateral stop **44a"** is illustratively in the form of a hinge retainer, for example, defining inboard hinge retainers. Each inboard lateral stop **44a"** is coupled to a same respective distal inboard attachment point **32a"** as an inboard spring **50a",** via the attachment bracket **34"** and fastener **33",** that is coupled to an adjacent rotationally spaced inboard arcuate arm **42a".** As will be appreciated by those skilled in the art, the inboard lateral stops **44a"** may provide increased lateral stability or may reduce or absorb increased lateral forces or side-loading. There may be any number of inboard lateral stops **44a".**

Outboard lateral stops **44b"** are each coupled between a respective distal outboard attachment point **32b"** and a respective proximal outboard attachment point **43b".** Each outboard lateral stop **44b"** is illustratively in the form of a hinge retainer, for example, defining outboard hinge retainers. Each outboard lateral stop **44b"** is coupled to a same respective distal outboard attachment point **32b",** via the attachment bracket **34"** and fastener **33",** as an outboard spring **50b"** that is coupled to an adjacent rotationally spaced outboard arcuate arm **42b".** As will be appreciated by those skilled in the art, the outboard lateral stops **44b"** may provide increased lateral stability or may reduce or absorb increased lateral forces or side-loading. There may be any number of outboard lateral stops **44b".** An elastomeric body or other spacer may be between a gas spring **50a", 50b",** and an inboard or outboard lateral stop **44a", 44b"** to reduce friction therebetween and to further permit relative movement between the gas springs and lateral stops.

An elastomeric body **55"** is carried by an interior of the outer rim **31".** The elastomeric body **55"** may define a mechanical stop or displacement limiter, for example, for the inboard and outboard lateral stops **44a", 44b".** Other and/or additional mechanical stops may be used, for example, to limit displacement.

A method aspect is directed to a method of making a wheel assembly **20"** for coupling to an axle **21".** The method includes coupling a plurality of distal inboard attachment points **32a"** coupled to an outer rim **31",** and coupling a plurality of distal outboard attachment points **32b"** to the outer rim. The method also includes coupling each of a plurality of inboard gas springs **50a"** between respective ones of the plurality of distal inboard attachment points **32a"** and respective one of a plurality of proximal inboard attachment points **43a"** defined by of a plurality of rotationally spaced inboard arcuate arms **42a"** of an axle attachment assembly **40"** extending outwardly from a medial portion **41"** of the axle attachment assembly. The method further includes coupling each of a plurality of outboard gas springs **50b"** between respective ones of the plurality of distal outboard attachment points **32b"** and respective one of a plurality of proximal inboard attachment points **43a"** defined by of a plurality of rotationally spaced outboard arcuate arms **42b"** of an axle attachment assembly **40"** extending outwardly from a medial portion **41"** of the axle attachment assembly.

## Claims

1. A wheel assembly (20) for coupling to an axle (21) comprising:
an outer rim (31);
a plurality of distal inboard attachment points (32a) coupled to the outer rim and a plurality of distal outboard attachment points (32b) coupled to the outer rim;
an inboard axle attachment assembly (40a) comprising an inboard medial portion (41a) to be coupled to the axle and a plurality of angularly spaced inboard arms (42a) extending outwardly from the inboard medial portion and defining proximal inboard attachment points;
an outboard axle attachment assembly (40b) rotationally offset from the inboard axle attachment assembly and comprising an outboard medial portion (41b) to be coupled to the axle and a plurality of angularly spaced outboard arms (42b) extending outwardly from the outboard medial portion and defining proximal outboard attachment points;
each of the inboard and outboard axle attachment assemblies having an axle receiving opening therein and a keyway coupled thereto to receive a locking spline (23) within the keyway and the axle receiving opening;
a plurality of inboard gas springs (50a) with associated integral hydraulic dampers, and each coupled between respective ones of the distal inboard attachment points and the proximal inboard attachment points; and
a plurality of outboard gas springs (50b) with associated integral hydraulic dampers, and each coupled between respective ones of the distal outboard attachment points and the proximal outboard attachment points.

2. The wheel assembly of Claim 1 wherein the rotational offset between the inboard and outboard axle attachment assemblies permits inboard and outboard access to the plurality of inboard and outboard gas springs at the plurality of the distal inboard and distal outboard attachment points.

3. The wheel assembly of Claim 1 wherein the plurality of angularly spaced outboard arms are equally spaced around the outboard medial portion; and wherein the plurality of angularly spaced inboard arms are equally spaced around the inboard medial portion.

4. The wheel assembly of Claim 1 wherein each of the plurality of inboard and outboard gas springs with associated hydraulic dampers comprises:
a first cylinder body (51a) and a second cylinder body (51b) slidable therein;
a first seal (56) carried by an end of the second cylinder body defining first and second gas chambers (54a, 54b) within the first cylinder body;
a shaft (62) extending within the first cylinder body and into the second cylinder body defining a hydraulic fluid chamber (63) within the second cylinder body; and
an enlarged orifice body (68) coupled to the shaft defining [[a]] the hydraulic damper with the second cylinder body.

5. The wheel assembly of Claim 1 wherein each of the plurality of inboard and outboard gas springs has an operating stroke defining a mechanical stop.

6. The wheel assembly of Claim 1 further comprising a tread (25) carried by an exterior of the outer rim.

7. The wheel assembly of Claim 6 wherein the tread comprises a solid non-pneumatic tread.

8. A method of making a wheel assembly (20) for coupling to an axle (21) comprising:
coupling a plurality of distal inboard attachment points (32a) to an outer rim (31) and a plurality of distal outboard attachment points (32b) coupled to the outer rim;
coupling an inboard axle attachment assembly (40a) to the axle, the inboard axle attachment assembly comprising an inboard medial portion (41a) to be coupled to the axle and a plurality of angularly spaced inboard arms (42a) extending outwardly from the inboard medial portion and defining proximal inboard attachment points;
coupling an outboard axle attachment assembly (40b) to the axle, the outboard axle attachment assembly being rotationally offset from the inboard axle attachment assembly and comprising an outboard medial portion (41b) to be coupled to the axle and a plurality of angularly spaced outboard arms (42b) extending outwardly from the outboard medial portion and defining proximal outboard attachment points;
each of the inboard and outboard axle attachment assemblies having an axle receiving opening therein and a keyway coupled thereto to receive a locking spline (23) within the keyway and the axle receiving opening;
coupling each of a plurality of inboard gas springs (50a) with associated integral hydraulic dampers, between respective ones of the distal inboard attachment points and the proximal inboard attachment points; and
coupling each of a plurality of outboard gas springs (50b) with associated integral hydraulic dampers, between respective ones of the distal outboard attachment points and the proximal outboard attachment points.

9. The method of Claim 8 wherein the rotational offset between the inboard and outboard axle attachment assemblies permits inboard and outboard access to the plurality of inboard and outboard gas springs at the plurality of the distal inboard and distal outboard attachment points.

10. The method of Claim 8 wherein the axle has an axle keyway therein; and wherein the inner and outer axle attachment assemblies each have an axle receiving opening and a keyway coupled thereto to receive a locking spline (23) within the keyways and the axle keyway.

11. The method of Claim 8 wherein the plurality of angularly spaced outboard arms are equally spaced around the outboard medial portion; and wherein the plurality of angularly spaced inboard arms are equally spaced around the inboard medial portion.

12. The method of Claim 8 wherein the plurality of inboard and outboard gas springs comprises a plurality of inboard and outboard gas springs with associated integral hydraulic dampers.

13. The method of Claim 8 wherein each of the plurality of inboard and outboard gas springs comprises:
a first cylinder body and a second cylinder body slidable therein;
a first seal carried by an end of the second cylinder body defining first and second gas chambers within the first cylinder body;
a shaft extending within the first cylinder body and into the second cylinder body defining a hydraulic fluid chamber within the second cylinder body; and
an enlarged orifice body coupled to the shaft defining a hydraulic damper with the second cylinder body.

14. The method of Claim 8 further comprising coupling a tread to an exterior of the outer rim.

## Patentansprüche

1. Radanordnung (20) zur Kupplung mit einer Achse (21), umfassend:
eine Außenfelge (31);
eine Vielzahl von distalen innenliegenden Anbringungspunkten (32a), die mit der Außenfelge gekuppelt wird, und eine Vielzahl von distalen außenliegenden Anbringungspunkten (32b), die mit der Außenfelge gekuppelt wird;
eine innenliegende Achsenanbringungsanordnung (40a), die einen innenliegenden mittleren Abschnitt (41a), der mit der Achse zu kuppeln ist, und eine Vielzahl von in einem Winkel beabstandeten innenliegenden Armen (42a), die sich von dem innenliegenden mittleren Abschnitt nach außen erstrecken und proximale innenliegende Anbringungspunkte definieren, umfasst;
eine außenliegende Achsenanbringungsanordnung (40b), die von der innenliegenden Achsenanbringungsanordnung drehversetzt ist und einen außenliegenden mittleren Abschnitt (41b), der mit der Achse zu kuppeln ist, und eine Vielzahl von in einem Winkel beabstandeten außenliegenden Armen (42b), die sich von dem außenliegenden mittleren Abschnitt nach außen erstrecken und proximale außenliegende Anbringungspunkte definieren, umfasst;
wobei jede der innenliegenden und der außenliegenden Achsenanbringungsanordnung eine Achsenaufnahmeöffnung darin und eine damit gekuppelte Keilnut aufweist, um einen Arretierdorn (23) innerhalb der Keilnut und der Achsenaufnahmeöffnung aufzunehmen;
eine Vielzahl von innenliegenden Gasdruckfedern (50a) mit assoziierten integralen hydraulischen Dämpfungen, und die jeweils zwischen jeweiligen einen der distalen innenliegenden Anbringungspunkte und der proximalen innenliegenden Anbringungspunkte gekuppelt sind; und
eine Vielzahl von außenliegenden Gasdruckfedern (50b) mit assoziierten integralen hydraulischen Dämpfungen, und die jeweils zwischen jeweiligen einen der distalen außenliegenden Anbringungspunkte und der proximalen außenliegenden Anbringungspunkte gekuppelt sind.

2. Radanordnung nach Anspruch 1, wobei der Drehversatz zwischen der innenliegenden und der außenliegenden Achsenanbringungsanordnungen einen innenliegenden und einen außenliegenden Zugriff auf die Vielzahl von innenliegenden und außenliegenden Gasdruckfedern an der Vielzahl der distalen innenliegenden und der distalen außenliegenden Anbringungspunkte zulässt.

3. Radanordnung nach Anspruch 1, wobei die Vielzahl von in einem Winkel beabstandeten außenliegenden Armen gleichmäßig um den außenliegenden mittleren Abschnitt beabstandet ist; und wobei die Vielzahl von in einem Winkel beabstandeten innenliegenden Armen gleichmäßig um den innenliegenden mittleren Abschnitt beabstandet ist.

4. Radanordnung nach Anspruch 1, wobei jede der Vielzahl von innenliegenden und außenliegenden Gasdruckfedern mit assoziierten hydraulischen Dämpfungen umfasst:
einen ersten Zylinderkörper (51a) und einen zweiten Zylinderkörper (51b), die darin verschiebbar sind;
eine erste Dichtung (56), die von einem Ende des zweiten Zylinderkörpers getragen wird, eine erste und eine zweite Gaskammer (54a, 54b) innerhalb des ersten Zylinderkörpers definierend;
eine Welle (62), die sich innerhalb des ersten Zylinderkörpers und in den zweiten Zylinderkörper erstreckt, eine Hydraulikflüssigkeitskammer (63) innerhalb des zweiten Zylinderkörpers definierend; und
einen vergrößerten Öffnungskörper (68), der mit der Welle gekuppelt ist, [[a]] die hydraulische Dämpfung mit dem zweiten Zylinderkörper definierend.

5. Radanordnung nach Anspruch 1, wobei jede der Vielzahl von innenliegenden und außenliegenden Gasdruckfedern einen Arbeitshub aufweist, der einen mechanischen Anschlag definiert.

6. Radanordnung nach Anspruch 1, ferner umfassend eine Lauffläche (25), die von einer Außenseite der Außenfelge getragen wird.

7. Radanordnung nach Anspruch 6, wobei die Lauffläche eine massive nicht-pneumatische Lauffläche umfasst.

8. Verfahren zur Herstellung einer Radanordnung (20) zur Kupplung mit einer Achse (21), umfassend:
Kuppeln einer Vielzahl von distalen innenliegenden Anbringungspunkten (32a) mit einer Außenfelge (31) und einer Vielzahl von distalen außenliegenden Anbringungspunkten (32b), die mit der Außenfelge gekuppelt wird;
Kuppeln einer innenliegenden Achsenanbringungsanordnung (40a) mit der Achse, wobei die innenliegende Achsenanbringungsanordnung einen innenliegenden mittleren Abschnitt (41a), der mit der Achse zu kuppeln ist, und eine Vielzahl von in einem Winkel beabstandeten innenliegenden Armen (42a), die sich von dem innenliegenden mittleren Abschnitt nach außen erstrecken und proximale innenliegende Anbringungspunkte definieren, umfasst;
Kuppeln einer außenliegenden Achsenanbringungsanordnung (40b) mit der Achse, die von der innenliegenden Achsenanbringungsanordnung drehversetzt ist und einen außenliegenden mittleren Abschnitt (41b), der mit der Achse zu kuppeln ist, und eine Vielzahl von in einem Winkel beabstandeten außenliegenden Armen (42b), die sich von dem außenliegenden mittleren Abschnitt nach außen erstrecken und proximale außenliegende Anbringungspunkte definieren, umfasst;
wobei jede der innenliegenden und der außenliegenden Achsenanbringungsanordnung eine Achsenaufnahmeöffnung darin und eine damit gekuppelte Keilnut aufweist, um einen Arretierdorn (23) innerhalb der Keilnut und der Achsenaufnahmeöffnung aufzunehmen;
Kuppeln jeder einer Vielzahl von innenliegenden Gasdruckfedern (50a) mit assoziierten integralen hydraulischen Dämpfungen zwischen jeweiligen einen der distalen innenliegenden Anbringungspunkte und der proximalen innenliegenden Anbringungspunkte; und
Kuppeln jeder einer Vielzahl von außenliegenden Gasdruckfedern (50b) mit assoziierten integralen hydraulischen Dämpfungen zwischen jeweiligen einen der distalen außenliegenden Anbringungspunkte und der proximalen außenliegenden Anbringungspunkte.

9. Verfahren nach Anspruch 8, wobei der Drehversatz zwischen der innenliegenden und der außenliegenden Achsenanbringungsanordnungen einen innenliegenden und einen außenliegenden Zugriff auf die Vielzahl von innenliegenden und außenliegenden Gasdruckfedern an der Vielzahl der distalen innenliegenden und der distalen außenliegenden Anbringungspunkte zulässt.

10. Verfahren nach Anspruch 8, wobei die Achse eine Achsenkeilnut darin aufweist; und wobei die innere und die äußere Achsenanbringungsanordnung jeweils eine Achsenaufnahmeöffnung und eine damit gekuppelte Keilnut aufweisen, um einen Arretierdorn (23) innerhalb der Keilnuten und der Achsenkeilnut aufzunehmen.

11. Verfahren nach Anspruch 8, wobei die Vielzahl von in einem Winkel beabstandeten außenliegenden Armen gleichmäßig um den außenliegenden mittleren Abschnitt beabstandet ist; und wobei die Vielzahl von in einem Winkel beabstandeten innenliegenden Armen gleichmäßig um den innenliegenden mittleren Abschnitt beabstandet ist.

12. Verfahren nach Anspruch 8, wobei die Vielzahl von innenliegenden und außenliegenden Gasdruckfedern eine Vielzahl von innenliegenden und außenliegenden Gasdruckfedern mit assoziierten integralen hydraulischen Dämpfungen umfasst.

13. Verfahren nach Anspruch 8, wobei jede der Vielzahl von innenliegenden und außenliegenden Gasdruckfedern umfasst:
einen ersten Zylinderkörper und einen zweiten Zylinderkörper, die darin verschiebbar sind;
eine erste Dichtung, die von einem Ende des zweiten Zylinderkörpers getragen wird, eine erste und eine zweite Gaskammer innerhalb des ersten Zylinderkörpers definierend;
eine Welle, die sich innerhalb des ersten Zylinderkörpers und in den zweiten Zylinderkörper erstreckt, eine Hydraulikflüssigkeitskammer innerhalb des zweiten Zylinderkörpers definierend; und
einen vergrößerten Öffnungskörper, der mit der Welle gekuppelt ist, eine hydraulische Dämpfung mit dem zweiten Zylinderkörper definierend.

14. Verfahren nach Anspruch 8, ferner umfassend ein Kuppeln einer Lauffläche mit einer Außenseite der Außenfelge.

## Revendications

1. Un ensemble roue (20) destiné à être couplé à un essieu (21) comprenant :
une jante extérieure (31) ;
une pluralité de points de fixation intérieurs distaux (32a) couplés à la jante extérieure et une pluralité de points de fixation extérieurs distaux (32b) couplés à la jante extérieure ;
un ensemble de fixation d'essieu intérieur (40a) comprenant une partie médiane intérieure (41a) à coupler à l'essieu et une pluralité de bras intérieurs espacés angulairement (42a) s'étendant vers l'extérieur à partir de la partie médiane intérieure et définissant des points de fixation intérieurs proximaux ;
un ensemble de fixation d'essieu extérieur (40b) décalé en rotation de l'ensemble de fixation d'essieu intérieur et comprenant une partie médiane extérieure (41b) à coupler à l'essieu et une pluralité de bras extérieurs espacés angulairement (42b) s'étendant vers l'extérieur à partir de la partie médiane extérieure et définissant des points de fixation extérieurs proximaux ;
les ensembles de fixation d'essieu intérieur et extérieur ayant chacun une ouverture y recevant un essieu et une rainure de clavette y étant couplée pour recevoir une languette de verrouillage (23) à l'intérieur de la rainure de clavette et de l'ouverture recevant l'essieu ;
une pluralité de ressorts à gaz intérieurs (50a) ayant des amortisseurs hydrauliques intégrés associés, et étant chacun couplé entre respectivement les points de fixation intérieurs distaux et les points de fixation intérieurs proximaux ; et
une pluralité de ressorts à gaz extérieurs (50b) ayant des amortisseurs hydrauliques intégrés associés, et étant chacun couplé entre respectivement les points de fixation extérieurs distaux et les points de fixation extérieurs proximaux.

2. L'ensemble roue selon la revendication 1 dans lequel le décalage en rotation entre les ensembles de fixation d'essieu intérieur et extérieur permet l'accès à l'intérieur et à l'extérieur à la pluralité de ressorts à gaz intérieurs et extérieurs à la pluralité de points de fixation intérieurs distaux et extérieurs distaux.

3. L'ensemble roue selon la revendication 1 dans lequel la pluralité de bras extérieurs espacés angulairement sont placés à distance égale autour de la partie médiane extérieure ; et dans lequel la pluralité de bras intérieurs espacés angulairement sont placés à distance égale autour de la partie médiane intérieure.

4. L'ensemble roue selon la revendication 1 dans lequel la pluralité de ressorts à gaz intérieurs et extérieurs ayant des amortisseurs hydrauliques associés comprennent chacun :
un premier corps de cylindre (51a) et un deuxième corps de cylindre (51b) y coulissant à l'intérieur ;
un premier joint d'étanchéité (56) porté par une extrémité du deuxième corps de cylindre définissant des première et deuxième chambres à gaz (54a, 54b) à l'intérieur du premier corps de cylindre ;
un arbre (62) s'étendant à l'intérieur du premier corps de cylindre et dans le deuxième corps de cylindre définissant une chambre de fluide hydraulique (63) à l'intérieur du deuxième corps de cylindre ; et
un corps à orifice agrandi (68) couplé à l'arbre définissant [[un]] l'amortisseur hydraulique avec le deuxième corps de cylindre.

5. L'ensemble roue selon la revendication 1, dans lequel la pluralité de ressorts à gaz intérieurs et extérieurs ont une course de fonctionnement définissant une butée mécanique.

6. L'ensemble roue selon la revendication 1, comprenant en outre une bande de roulement (25) portée par un extérieur de la jante extérieure.

7. L'ensemble roue selon la revendication 6, dans lequel la bande de roulement comprend une bande de roulement non pneumatique pleine.

8. Un procédé de fabrication d'un ensemble roue (20) destiné à être couplé à un essieu (21) consistant à :
coupler une pluralité de points de fixation intérieurs distaux (32a) à une jante extérieure (31) et une pluralité de points de fixation extérieurs distaux (32b) couplés à la jante extérieure ;
coupler un ensemble de fixation d'essieu intérieur (40a) à l'essieu, l'ensemble de fixation d'essieu intérieur comprenant une partie médiane intérieure (41a) à coupler à l'essieu et une pluralité de bras intérieurs espacés angulairement (42a) s'étendant vers l'extérieur à partir de la partie médiane intérieure et définissant des points de fixation intérieurs proximaux ;
coupler un ensemble de fixation d'essieu extérieur (40b) à l'essieu, l'ensemble de fixation d'essieu extérieur étant décalé en rotation de l'ensemble de fixation d'essieu intérieur et comprenant une partie médiane extérieure (41b) à coupler à l'essieu et une pluralité de bras extérieurs espacés angulairement (42b) s'étendant vers l'extérieur à partir de la partie médiane extérieure et définissant des points de fixation extérieurs proximaux ;
les ensembles de fixation d'essieu intérieur et extérieur ayant chacun une ouverture y recevant un essieu et une rainure de clavette y étant couplée pour recevoir une languette de verrouillage (23) à l'intérieur de la rainure de clavette et l'ouverture recevant l'essieu ;
coupler chacun d'une pluralité de ressorts à gaz intérieurs (50a) ayant des amortisseurs hydrauliques intégrés associés, entre respectivement les points de fixation intérieurs distaux et les points de fixation intérieurs proximaux ; et
coupler chacun d'une pluralité de ressorts à gaz extérieurs (50b) ayant des amortisseurs hydrauliques intégrés associés, entre respectivement les points de fixation extérieurs distaux et les points de fixation extérieurs proximaux.

9. Le procédé selon la revendication 8, dans lequel le décalage en rotation entre les ensembles de fixation d'essieu intérieur et extérieur permet l'accès à l'intérieur et à l'extérieur à la pluralité de ressorts à gaz intérieurs et extérieurs à la pluralité des points de fixation intérieurs distaux et extérieurs distaux.

10. Le procédé selon la revendication 8, dans lequel l'essieu a une rainure de clavette d'essieu à l'intérieur ; et dans lequel les ensembles de fixation d'essieu intérieur et extérieur ont chacun une ouverture recevant l'essieu et une rainure de clavette y étant couplée pour recevoir une languette de verrouillage (23) à l'intérieur des rainure de clavette et de la rainure de clavette d'essieu.

11. Le procédé selon la revendication 8, dans lequel la pluralité de bras extérieurs espacés angulairement sont placés à distance égale autour de la partie médiane extérieure ; et dans lequel la pluralité de bras intérieurs espacés angulairement sont placés à distance égale autour de la partie médiane intérieure.

12. Le procédé selon la revendication 8, dans lequel la pluralité de ressorts à gaz intérieurs et extérieurs comprennent une pluralité de ressorts à gaz intérieurs et extérieurs ayant des amortisseurs hydrauliques intégrés associés.

13. Le procédé selon la revendication 8, dans lequel la pluralité de ressorts à gaz intérieurs et extérieurs comprennent chacun :
un premier corps de cylindre et un deuxième corps de cylindre y coulissant à l'intérieur ;
un premier joint d'étanchéité porté par une extrémité du deuxième corps de cylindre définissant des première et deuxième chambres à gaz à l'intérieur du premier corps de cylindre ;
un arbre s'étendant à l'intérieur du premier corps de cylindre et dans le deuxième corps de cylindre définissant une chambre de fluide hydraulique à l'intérieur du deuxième corps de cylindre ; et
un corps à orifice agrandi couplé à l'arbre définissant un amortisseur hydraulique avec le deuxième corps de cylindre.

14. Le procédé selon la revendication 8, consistant en outre à coupler une bande de roulement à un extérieur de la jante extérieure.
